# EUROPEAN PATENT APPLICATION

(11) **EP 0 644 693 A2**
(43) Date of publication of application: **22.03.1995**
(21) Application number: 94306819.7
(22) Date of filing: 19.09.1994
(51) Int. Cl.: H04N 7/088

(54) **Device and controlling method for reserved recording a VCR utilizing teletext data**

(30) Priority: 17.09.1993 KR 1883993
(71) Applicant: LG ELECTRONICS INC., Seoul (KR)
(72) Inventor: Hong, Sung Hyun, Yongsan-ku, Seoul (KR)
(74) Representative: Cross, Rupert Edward Blount

(57) **Abstract**

This invention relates to a device and controlling method, which can carry out a reserve recording with a VCR with easily utilizing teletext data, containing list data for broadcasting schedule teletext page of each broadcasting station.

Accordingly, since this invention allows to carry out an easy reserve recording of a broadcasting channel which is not under reception, this invention has an advantage of reducing the possibility of error development.

## Description

### FIELD OF THE INVENTION

This invention relates to a device and controlling method for reserve recording a VCR(Video Cassette Tape Recorder) utilizing teletext data, more particularly to a device and controlling method for reserve recording a VCR utilizing teletext data, which can carry out a reserve recording a VCR utilizing teletext data containing list data for broadcasting schedule teletext page of each broadcasting station.

### BACKGROUND OF THE INVENTION

Teletext data includes broadcasting schedule teletext page telling which page of the transmitted teletext the data indicating broadcasting schedule for a broadcasting program of the corresponding broadcasting station is in.

Accordingly, a conventional VCR reserve recording system carries out a reserved recording utilizing information on broadcasting schedule teletext page of the teletext data in broadcasting signal of the channel under reception at the time of reserve recording.

And the conventional VCR reserve recording system requires many steps for recording a desired broadcasting program of a broadcasting station because, in case it is desired to record a broadcasting program of a channel other than a channel under reception at the present time, it is required to come out of the teletext mode of the broadcasting signal under reception to shift to a channel of a broadcasting station desired to record and enter into a teletext mode of the corresponding channel, and carry out a reserve recording of the broadcasting program.

Consequently, the reserve recording system of a conventional VCR has problems that it is not convenient for use, time consuming, and liable to error since it requires many steps for carrying out a reserve recording of a desired broadcasting program of a broadcasting station.

### SUMMARY OF THE INVENTION

The object of this invention is to provide a device and controlling method for reserve recording a VCR utilizing teletext data which permits to carry out easy reserve recording of a broadcasting station channel not under reception at the present time using teletext data containing list data for broadcasting schedule teletext page of each broadcasting station.

These and other objects and features of this invention can be achieved by providing a device for reserve recording a VCR utilizing teletext data including a synchronizing means for synchronizing to a particular channel of broadcasting signals applied through an antenna, an audio demodulation means for demodulating modulated audio signal received from the synchronizing means, an audio processor for processing audio signal received from the audio demodulation means and carrying out recording and transmitting the processed audio signal, an video demodulation means for demodulating modulated video signal received from the synchronizing means, a data slicing means for extracting teletext data contained in image signal received from the video demodulation means, a data decoding means for decoding teletext data received from the data slicing means, a microprocessor for controlling entire system using data received from the data decoding means and key signals applied from outside, a memory for mapping and storing the data received from the data decoding means classified by actual broadcasting channels, name of broadcasting stations, and broadcasting schedule teletext pages under the control of the microprocessor, a character signal generation means for generating equivalent character signal under the control of the microprocessor, a switching means for selecting one of the video signal received from the video demodulation means and the character signal generation means under the control of the microprocessor, and a video processor for processing video signal received from the switching means, and recording and displaying the processed video signal under the control of the microprocessor, and by providing a controlling method for reserve recording a VCR utilizing teletext data including steps of a broadcasting schedule teletext page mapping for receiving teletext data containing list data for broadcasting schedule teletext page of each broadcasting station, and mapping and storing channel positions, actual broadcasting channels, name of broadcasting stations, and broadcasting schedule teletext pages coming under each broadcasting station, a broadcasting station information display for displaying stored channel positions, actual channels, and name of broadcasting stations on ordering a reserve recording, a reserve recording broadcasting station selection for selecting a broadcasting station desired to reserve record from the displayed broadcasting station information, a teletext data searching for searching teletext data of broadcasting schedule teletext page coming under the selected broadcasting station, a broadcasting schedule display for displaying broadcasting program contained in the searched broadcasting schedule teletext page, a broadcasting program data storing for selecting a broadcasting program desired to reserve record from the displayed broadcasting schedule and storing data coming under the selected broadcasting program, and a reserve recording execution for executing reserve recording of the selected broadcasting program according to the stored broadcasting program data.

### BRIEF DESCRIPTION OF THE DRAWINGS

FIG. 1 is a device for reserve recording a VCR in accordance with this invention.

FIG. 2 is data stored in the memory of FIG. 1.

FIG. 3 is a method for controlling the device for reserve recording a VCR in accordance with this invention.

### DETAILED DESCRIPTION OF THE INVENTION

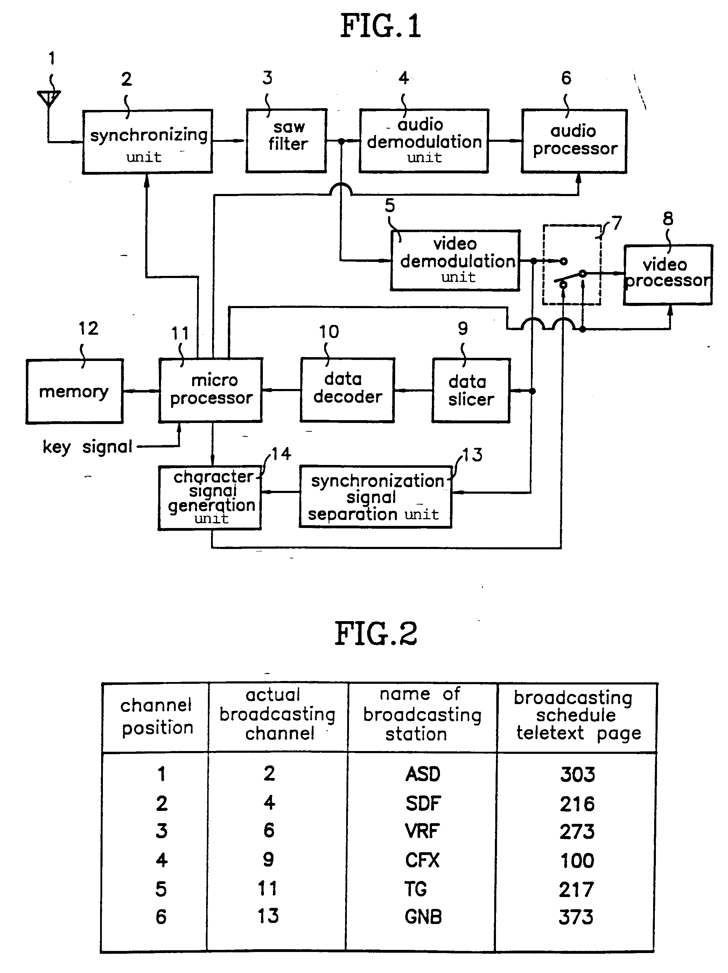

As shown in FIG. 1, a circuit device for controlling a VCR to perform programmed recording utilizing teletext data includes a tuning or synchronization unit 2, a saw filter 3, an audio demodulation unit 4, a video demodulation unit 5, an audio processor 6, a switch 7, a video processor 8, a data slicer 9, a data decoder 10, a microprocessor 11, a memory 12, a synchronization signal separation unit 13, and a character signal generation unit 14.

The synchronization unit 2 synchronizes to a particular channel of the broadcasting signals received through an antenna 1 under the control of the microprocessor 11, and the saw filter 3 filters the audio signal from the video signal received from the synchronization unit 2 and applies the filtered signals to the audio demodulation unit 4 and the video demodulation unit 5.

The audio demodulation unit 4 demodulates the modulated audio signal received from the synchronization unit 2 via the saw filter 3, and the audio processor 6 processes the audio signal received from the audio demodulation unit 4 and records the audio signal or transmits it to a speaker under the control of the microprocessor 11.

The video demodulation unit 5 demodulates the modulated video signal received from the synchronization unit via the saw filter 3.

The data slicer 9 extracts the teletext data contained in the video signal received from the video demodulation unit 5, and the data decoder 10 decodes the teletext data received from the data slicer 9 and transmits the decoded data to the microprocessor 11.

The teletext data includes list data containing the broadcasting schedule of each broadcasting station.

The microprocessor 11 controls the entire system using both key signals received from outside and data received from the data decoder 10, and particularly controls the memory 12 to contain a map of data, identifying for each station the actual broadcast channel number, the name of the station, the channel position, and the teletext page for the respective channel carrying the broadcasting schedule.

The synchronization signal separation unit 13 extracts the synchronization signal from the video signal received from video demodulation unit 5 and applies the synchronization signal to the character signal generation unit 14.

The character signal generation unit 14 generates corresponding character signals in response to the synchronization signal received from the synchronization signal separation unit 13 under the control of the microprocessor 11.

The switch 7 selects one of the video signals received either from the video demodulation unit 5 or from the character signal generation unit 14 and applies the selected signal to the video processor 8 under the control of the microprocessor 11.

The video processor 8 processes the video signal received from the switch 7, and either records or transmits the processed signal for display on a monitor under the control of the microprocessor 11.

Operation of the foregoing circuit device for programmed recording is explained as follows.

First, in order to receive the teletext index data containing the broadcasting schedule page number of each broadcasting station, the microprocessor 11 controls the synchronization unit 2 to synchronize to a particular channel.

The audio signal and the video signal received from the synchronization unit 2 are filtered by the saw filter 3. The video signal received from the saw filter 3 is demodulated at the video demodulation unit 5 and has the teletext data extracted at the data slicer 9, which teletext data contains the index data. The teletext data corresponding to the index data is decoded at the decoder 10 and applied to the microprocessor 11.

The index data received from the data decoder 10 is then mapped, being classified into actual broadcasting channels, name of broadcasting stations, channel positions, and broadcasting schedule teletext page numbers, and stored in the memory 12 as shown in FIG. 2.

It should be understood that the number of the teletext page containing the broadcasting schedule of each broadcasting station is carried in teletext index data. Programmed recording can be performed utilizing these broadcasting schedule teletext pages.

When a user presses a key to request a programmed recording, the microprocessor 11, controls the character signal generation unit 14 to display mapped data in the memory 12 including the stored actual broadcasting channels, name of broadcasting stations, and channel positions.

At this time, to ensure a smooth display on a monitor, the synchronization signal separation unit 13 separates the synchronization signal from the video signal received from the video demodulation unit 5 and transmits the separated synchronization signal to the character signal generation unit 14.

The actual broadcasting channels, name of broadcasting stations, and channel positions received from the microprocessor 11 are processed at the character signal generation unit 14 together with the synchronization signal received from the synchronization signal separation unit 13 and applied to the switch 7.

At this time also, the switch 7 selects the character signal received from the character signal generation unit 14 and applies the selected signal to the video processor which processes the selected signal and displays it on the monitor.

Then, the user can select the broadcasting station desired for a programmed recording using the keys, referring to the actual broadcasting channels, name of broadcasting stations, and channel positions displayed on the monitor.

When a user presses keys corresponding to a desired broadcasting station, the microprocessor 11 responds by reading from memory 12 the teletext page number for the broadcasting schedule of the desired station, setting the synchronization unit 2 to receive the desired station and controlling the character signal generation unit 14, the switch 7, and the video processor 8 to display the appropriate teletext page containing the broadcasting schedule as transmitted by the desired station. In this, the process for extracting and decoding teletext data received from the synchronization unit 2 is the same with the foregoing process for receiving and processing the teletext data.

Now, the user can select a broadcasting program desired for programmed recording from the displayed broadcasting schedule, and, upon reception of the key signal, the microprocessor 11 detects the key signal and stores the data corresponding to the selected broadcasting program into the memory 12. Then, the microprocessor 11 controls the synchronization unit 2, the audio processor 6, the switch 7, and the video processor 8 to carry out the programmed recording of the selected broadcasting program according to the stored broadcasting program data.

Thus, when the time for executing the programmed recording comes, the microprocessor 11 controls the synchronization unit 2 to synchronize to the channel corresponding to the selected broadcasting station, and the audio and video signals from the synchronization unit 2 are filtered through the saw filter 3. The audio signal is demodulated in the audio demodulation unit 4 and recorded after processing in the audio processor 6 under the control of the microprocessor 11. Similarly, the video signal is demodulated in the video demodulation unit 5 and recorded, having been selected by the switch 7 and processed in the video processor 8 under the control of the microprocessor 11.

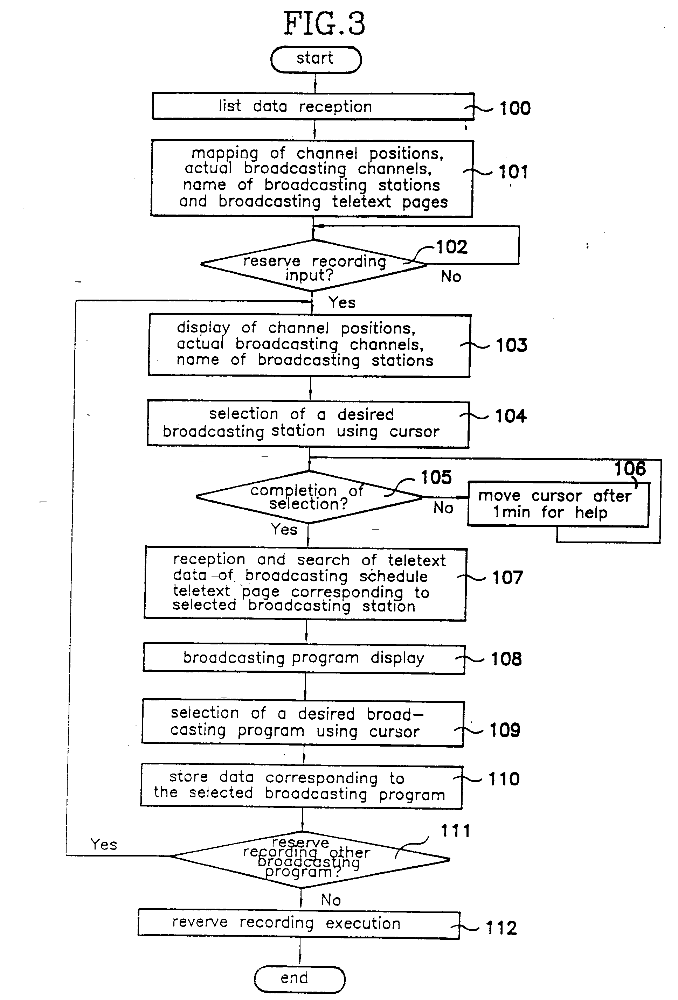

Method for controlling a reserve recording device of a VCR utilizing teletext data in accordance with this invention is to be explained hereinafter, referring to FIG. 3.

First, a broadcasting schedule teletext page mapping step 100 and 101 is carried out for receiving the teletext data containing list data for broadcasting schedule teletext page of each broadcasting station and for mapping and storing actual broadcasting channels, name of broadcasting stations, channel positions, and broadcasting schedule teletext pages coming under each broadcasting station.

The broadcasting schedule teletext page mapping step is carried out periodically to prepare for the case of change of the broadcasting schedule teletext page. That is, the broadcasting schedule teletext page mapping step is carried out through receiving the teletext data periodically and mapping and storing actual broadcasting channels, name of broadcasting stations, channel positions, and broadcasting schedule teletext pages coming under each broadcasting station.

After the broadcasting schedule teletext page mapping step is carried out, when a user orders a reserve recording, a broadcasting station information display step 102 and 103 is carried out for displaying the stored actual broadcasting channels, name of broadcasting stations, and channel positions.

After the broadcasting station information display step is carried out, a- reserve recording broadcasting station selection step 104, 105 and 106 is carried out for selecting a broadcasting station desired to reserve record from the displayed broadcasting station information.

Herein, for selecting the reserve recording broadcasting station, a cursor is used mostly, which is explained hereinafter.

Completion of selection of a broadcasting station desired to reserve record is searched 104 and 105, and, as the result of the search, if the selection has not been completed, after a while, the cursor is moved to produce and display equivalent character data, for example "select desired broadcasting station" 106, and as the result the search, if the selection of a desired broadcasting station has been completed, proceeds to next step. After the reserve recording broadcasting station selection step is carried out, a teletext data searching step 107 is carried out for searching the teletext data of broadcasting schedule teletext page coming under the selected broadcasting station, and a broadcasting schedule display step 108 is carried out for displaying broadcasting program contained in the searched corresponding broadcasting schedule teletext page.

After the broadcasting schedule display step is carried out, a broadcasting program data storing step 109 and 110 is carried out for selecting broadcasting program desired to reserve record from the displayed broadcasting schedule and storing the data corresponding to the selected broadcasting program. Herein, a cursor is used for selecting the desired broadcasting program.

After the broadcasting program data storing step is carried out, if it is required to reserve record other broadcasting program, an other broadcasting program reserve recording ordering step 111 which is a proceeding to the broadcasting station information display step 102 and 103 is carried out for storing data required for reserve recording of other broadcasting program in the same method with the foregoing.

After the broadcasting program data storing step is carried out, a reserve recording execution step 112 which is executing a reserve recording of the selected broadcasting program according to the stored broadcasting program data is carried out recording the reserved recording program.

Since this invention having the foregoing system and operation allows to carry out an easy reserve recording of a broadcasting channel which is not under reception, this invention has an advantage of reducing the possibility of error development.

Although the invention has been described in conjunction with specific embodiments, it is evident that many alternatives and variations will be apparent to those skilled in the art in light of the foregoing description. Accordingly, the invention is intended to embrace all of the alternatives and variations that fall within the spirit and scope of the appended claims.

## Claims

1. Apparatus for controlling a VCR to perform programmed recording utilizing teletext data; the apparatus comprising:
controlled tuning means for tuning a receiver to selected broadcast channels, teletext receiving means for extracting and decoding teletext data from the video signal being received by the tuning means, on the selected channel,
a memory,
a microprocessor arranged to control the tuning means to receive via the teletext receiving means teletext index data from each of a plurality of broadcast stations received on selected channels, said index data including data identifying the teletext page number for the respective channel containing the broadcasting schedule, and to store said index data in the memory to form a data map containing for each broadcast station data identifying at least the channel and said teletext page number,
character generator means controlled by the microprocessor for generating a teletext video signal for displaying teletext type characters,
and switching means controlled by the microprocessor to direct either the broadcast video signal being received by the tuning means or the teletext video signal from the character generator means for recording and/or display,
the microprocessor being responsive to an operator request for programmed recording from a selected channel to control the tuning means to receive the selected channel, to identify from said data map in the memory the teletext page for the broadcasting schedule on the selected channel, to control the character generator means to produce a teletext video signal representing the identified page of teletext data received on the selected channel and to control said switching means to display said page.

2. Apparatus as claimed in Claim 1 wherein the microprocessor is initially responsive to an operator request for programmed recording to control the character generator means and said switching means to display the data map contained in the memory, and is then responsive to the operator selecting the channel from which programmed recording is required.

3. A device for reserve recording a VCR utilizing teletext data comprising:
a synchronizing means for synchronizing to a particular channel of broadcasting signals applied through an antenna;
an audio demodulation means for demodulating modulated audio signal received from the synchronizing means;
an audio processor for processing audio signal received from the audio demodulation means and carrying out recording and transmitting the processed audio signal;
a video demodulation means for demodulating modulated video signal received from the synchronizing means;
a data slicing means for extracting teletext data contained in image signal received from the video demodulation means;
a data decoding means for decoding teletext data received from the data slicing means;
a microprocessor for controlling entire system using data received from the data decoding means and key signal applied from outside;
a memory for mapping and storing the data received from the data decoding means classified by actual broadcasting channels, name of broadcasting stations, and broadcasting schedule teletext pages under the control of the microprocessor;
a character signal generation means for generating equivalent character signal under the control of the microprocessor;
a switching means for selecting one of the video signal received from the video demodulation means and the character signal generation means under the control of the microprocessor; and
a video processor for processing video signal received from the switching means, and recording and displaying the processed video signal under the control of the microprocessor.

4. The device for reserve recording a VCR as claimed in Claim 3,
wherein the teletext data has list data for broadcasting schedule teletext page of each broadcasting station.

5. The device for reserve recording a VCR as claimed in Claims 3 or 4, further including a synchronization signal separation means which extracts synchronization signal from the image signal received from the video demodulation means and applies the synchronization signal to the character signal generation means.

6. The device for reserve recording a VCR as claimed in any one of Claims 3 to 5, further including a saw filter which filters audio signal and video signal received from the synchronization means and applies the filtered signal to the audio demodulation means and the video demodulation means.

7. The device for reserve recording a VCR as claimed in any one of Claims 3 to 6, wherein the memory has RAM.

8. The device for reserve recording a VCR as claimed in any one of Claims 3 to 7, wherein the memory stores further including channel position corresponding to the broadcasting station.

9. A controlling method for reserve recording a VCR utilizing teletext data comprising steps of:
a broadcasting schedule teletext page mapping for receiving teletext data containing list data for broadcasting schedule teletext page of each broadcasting station, and mapping and storing channel positions, actual broadcasting channels, name of broadcasting stations, and teletext pages for broadcasting schedule coming under each broadcasting station;
a broadcast station information display for displaying stored channel positions, actual channels, and name of broadcasting stations on ordering a reserve recording;
a reserve recording broadcasting station selection for selecting a broadcasting station desired to reserve record from the displayed broadcasting station information;
a teletext data searching for searching teletext data of broadcasting schedule teletext page coming under the selected broadcasting station;
a broadcasting schedule display for displaying broadcasting program contained in the searched broadcasting schedule teletext page;
a broadcasting program data storing for selecting a broadcasting program desired to reserve record from the displayed broadcasting schedule and storing data coming under the selected broadcasting program; and
a reserve recording execution for executing reserve recording of the selected broadcasting program according to the stored broadcasting program data.

10. The controlling method as claimed in Claim 9, wherein the broadcasting schedule teletext page mapping step is carried out through receiving the teletext data periodically and mapping and storing actual broadcasting channels, name of broadcasting stations, channel positions, and broadcasting schedule teletext pages coming under each broadcasting station.

11. The controlling method as claimed in any one of Claims 9 or 10, further including an other broadcasting program reserve recording ordering step for proceeding to the broadcasting station information display step is carried out after the broadcasting program data storing step is carried out, if required to reserve record other broadcasting program.

12. The controlling method as claimed in any one of Claims 9 to 11, wherein the reserve recording broadcasting station selection step for selecting a broadcasting station desired to reserve record from the displayed broadcasting station information is carried out using a cursor.

13. The controlling method as claimed in Claim 12, wherein the reserve recording broadcasting station selection step includes steps for;
searching completion of selection of a broadcasting station desired to reserve record is searched, and,
as the result of the search, if the selection of a desired broadcasting station has not been completed, after a while, the cursor is moved to produce and display equivalent character data, and as the result the search, if the selection of a desired broadcasting station has been completed, proceeds to next step.

14. The controlling method as claimed in any one of Claims 9 to 13, wherein the broadcasting program data storing step is carried out through selecting broadcasting program desired to reserve record from the displayed broadcasting schedule and storing the data corresponding to the selected broadcasting program.
